# EUROPEAN PATENT SPECIFICATION

(11) **EP 3 075 187 B1**
(45) Date of publication and mention of the grant of the patent: **02.11.2022**
(21) Application number: 14865451.0
(22) Date of filing: 26.11.2014
(51) Int. Cl.: H04W 28/16, H04W 56/00, H04W 88/08, H04W 88/02, H04L 5/00, H04W 48/10, H04W 16/14

(54) **MECHANISMS FOR CO-EXISTENCE OF LTE-U NETWORK WITH ITSELF AND WITH OTHER TECHNOLOGIES**
MECHANISMEN ZUR KOEXISTENZ VON LTE-U-NETZWERKEN MIT SICH SELBST UND MIT ANDEREN TECHNOLOGIEN
MÉCANISMES DE COEXISTENCE D'UN RÉSEAU LTE-U AVEC LUI-MÊME ET AVEC D'AUTRES TECHNOLOGIES

(30) Priority: 27.11.2013 US 201361909938 P; 06.01.2014 US 201461924194 P; 31.01.2014 US 201461933879 P; 29.08.2014 US 201414473008; 25.09.2014 US 201414496694; 25.09.2014 US 201414496725; 26.09.2014 WO PCT/US2014/057619
(43) Date of publication of application: 05.10.2016
(73) Proprietor: Apple Inc., Cupertino, CA 95014 (US)
(72) Inventor: BASHAR, Shafi, Santa Clara, California 95054 (US); SERGEYEV, Vadim, Nizhny Novgorod 603144 (RU); FWU, Jong-Kae, Sunnyvale, California 94087 (US)
(74) Representative: Gillard, Matthew Paul
(86) International application number: PCT/US2014/067693
(87) International publication number: WO 2015/081248

(56) References cited:
- WO-A1-2013/006988
- WO-A1-2013/010323
- WO-A1-2013/087835
- WO-A2-2012/148236
- US-A1- 2013 016 630
- US-A1- 2013 295 948
- LG ELECTRONICS: "Considerations on primary and second synchronization signals for new carrier type", 3GPP DRAFT; R1-121423_NCT_SYNC_CHANNEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599706, [retrieved on 2012-03-20]
- NEW POSTCOM: "Discussion on design of synchronized new carriers", 3GPP DRAFT; R1-124805_DISCUSSION ON DESIGN OF SYNCHRONIZED NEW CARRIERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. New Orleans, USA; 20121112 - 20121116 3 November 2012 (2012-11-03), XP050662801, Retrieved from the Internet: URL:http://www.3gpp.org/ftp/tsg_ran/WG1_RL 1/TSGR1_71/Docs/ [retrieved on 2012-11-03]
- ALCATEL-LUCENT ET AL: "On synchronized new carriers", 3GPP DRAFT; R1-125237 SYNCHRONIZED NCT-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121112 - 20121116 13 November 2012 (2012-11-13), XP050663095, Retrieved from the Internet: URL:http://www.3gpp.org/ftp/tsg_ran/WG1_RL 1/TSGR1_71/Docs/ [retrieved on 2012-11-13]
- ERICSSON ET AL.: 'The issue of deliberately omitting PSS/SSS/PBCH/SIB-1 in ABS for FeICIC performance requirements definition' R4-126528, 3GPP TSG-RAN WG4 MEETING #65 05 November 2012, NEW ORLEANS, USA, XP050674051

## Description

### BACKGROUND

Demand for wireless broadband data is ever increasing. The unlicensed spectrum is a tool being considered by cellular operators to augment their service offering. To utilize the unlicensed spectrum in Long Term Evolution Advance (LTE-A), a new study item proposal named "LTE in Unlicensed" or LTE-U or "Licensed Assisted Access" or LAA is under consideration in the 3^{rd} Generation Partnership Project (3GPP). The idea behind LTE-U is to extend the LTE platform into unlicensed deployments, thus enabling operators and vendors to maximally leverage existing or planned investments in LTE and/or Evolved Packet Core (EPC) hardware in the radio and core network, for example, when LTE-U is being considered a Supplemental Downlink or a Component Carrier (CA) in a LTE CA configuration.

The use of LTE in the unlicensed band necessitates co-existence of LTE with other incumbent technologies in that band. In addition, due to multiple LTE operators using the same unlicensed spectrum, self-coexistence among different LTE operators in the same band may be projected.

WO 2013/006988 A1 provides a method, apparatus and computer program product facilitating flexible time sharing among systems. A method and apparatus generate a secondary component carrier transmission plan including planned on and off durations. The planned on durations correspond to a time period for an apparatus and devices to communicate via an unlicensed band of the secondary component carrier. The planned off durations correspond to a time interval in which the devices may deactivate from the unlicensed band or remain disconnected from the unlicensed band. The method and apparatus also enable provision of the plan to the devices via a licensed band of a primary component carrier and detecting a medium of the unlicensed band prior to the expiration of the time period to determine whether the medium is available in order to decide whether to turn on transmissions to the unlicensed band after one of the planned off durations.

WO 2012/148236 A2 provides a method and an apparatus for transmitting a synchronization signal in a carrier aggregation system. The method comprises: transmitting via a first serving cell a synchronization signal setting information with regard to a second serving cell; and transmitting the synchronization signal via the second serving cell, wherein the synchronization signal is variably set by means of the synchronization signal setting information.

3GPP Tdoc. R1-124805, "Discussion on design of synchronized new carriers", 3GPP TSG RAN WG1 Meeting #71, November 2012, relates to a new carrier type in the licensed spectrum, a so-called synchronized carriers, which is synchronized with a legacy carrier, which is also referred to as the reference carrier, in time and frequency. The document discusses not transmitting PSS/SSS on those new carriers.

3GPP Tdoc. R1-125237, "On synchronized new carriers", 3GPP TSG RAN WG1 Meeting #71, November 2012, also relates to this new carrier type, and refers to it as a new carrier type (NCT).

Similar to R1-124805, also R1-125237 states that PSS/SSS/CRS are not needed for time/frequency synchronization and tracking purpose, by definition and may thus not be transmitted on this NCT.

### SUMMARY

The invention is defined by the subject matter of the independent claims. Advantageous embodiments are subject to the dependent claims.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
Fig. 1 illustrates a section of an end-to-end network architecture of an Long Term Evolution Unlicensed (LTE-U) network with various components of the network to provide mechanisms for co-existence with itself, with other LTE operators, and with incumbent technologies, according to some embodiments of the invention.
**Fig. 2** illustrates a block diagram of a User Equipment (UE) with mechanisms to operate in co-existence with itself in an LTE-U network, with other LTE operators, and with other incumbent technologies according to some embodiments of the invention.
**Fig. 3** illustrates a block diagram of an Enhanced/Evolved Universal Mobile Telecommunications System (UMTS) Terrestrial Radio Access Network (E-UTRAN) Node B (eNB) with mechanisms to operate in co-existence with itself in an LTE-U network, with other LTE operators, and with other incumbent technologies according to some embodiments of the invention.
**Fig. 4** illustrates a simplified cell configuration in which the eNB communicates with one or more UEs on an LTE-U network operating in an unlicensed spectrum such that the LTE-U network co-exists with different LTE operators and reduces or eliminates interference with other incumbent technologies, according to some embodiments of the invention.
**Fig. 5** illustrates a simplified cell configuration in which eNB communicates with one or more UEs on an LTE network operating in an unlicensed spectrum (i.e., LTE-U network) such that the LTE-U network co-exists with itself, with different LTE operators, and reduces or eliminates interference with other incumbent technologies, according to some embodiments of the invenition.
**Fig. 6** illustrates a plot with several frequency bands such that Primary Synchronization Signal (PSS) and Secondary Synchronization Signal (SSS) are relocated for co-existence of LTE-U with incumbent Digital Television (DTV) transmission, and for self-coexistence with other LTE-U operators.
**Fig. 7** illustrates a configuration scenario to resolve a possible interference associated with a Hidden Wi-Fi Terminal or Device which is sensed by a UE and/or eNB of the LTE-U network to ensure co-existence with the Wi-Fi Terminal.
**Fig. 8** illustrates a timeline diagram exemplifying a mechanism for turning on/off an eNB for co-existence of LTE-U network with incumbent transmissions, and for self-coexistence with other LTE-U operators.
**Fig. 9** illustrates a flowchart exemplifying the mechanism of **Fig. 8****.**
**Fig. 10** illustrates a flowchart exemplifying a mechanism initiated by a UE for co-existence of the LTE-U network with itself, with incumbent transmissions, and for self-coexistence with other LTE-U operators.
**Fig. 11A** illustrates a sub-frame with Common Reference Signal (CRS).
**Fig. 11B** illustrates a sub-frame with CRS free transmission.
**Fig. 12** illustrates a spectrum with several frequency bands such that CRS transmission is reduced for co-existence of the LTE-U network with itself, with incumbent DTV transmission, and for coexistence with other LTE-U operators.
**Fig. 13** illustrates a UE with mechanisms to operate in co-existence with itself, with other incumbent technologies, and/or with other LTE operators in an LTE-U networkaccording to some embodiments of the invention.

### DETAILED DESCRIPTION

LAA/LTE-U network can be deployed in various unlicensed frequency bands. The design of an LTE-U network should be dependent on the spectrum under consideration. The channel characteristics such as carrier frequency, frequency selectivity, etc., are dependent on the carrier frequency. Incumbent technologies using the spectrum will naturally affect the interference profile of the LTE-U network using the unlicensed band or spectrum.

An example of an unlicensed band (i.e., unlicensed frequency spectrum) is the Television's (TV) white spaces in the frequency range of 54MHz to 862MHz. This frequency range is used by Digital TV (DTV), wireless microphone, and Institute of Electrical and Electronics Engineers (IEEE) 802.22 Wireless Regional Area Network (WRAN). Another potential unlicensed spectrum that can be used for a LTE-U network is the 5GHz spectrum which is currently being used by the IEEE 802.11a, c, and ac Wireless Local Area Networks (WLANs) (e.g., frequency range of 5725MHz to 5850MHz).

The characteristics and requirements of DTV and IEEE 802.11 are very different. In addition, the regulatory requirements (e.g., those regulated by the Federal Communications Commission (FCC)) of DTV and IEEE 802.11 also vary between different technologies. This means that an LTE-U network design specification is dependent on the carrier frequency and on the incumbent technologies of the potential unlicensed frequency spectrums.

In the following description, numerous details are discussed to provide a more thorough explanation of embodiments of the present disclosure. It will be apparent, however, to one skilled in the art, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate more constituent signal paths, and/or have arrows at one or more ends, to indicate primary information flow direction. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical or wireless connection between the things that are connected, without any intermediary devices. The term "coupled" means either a direct electrical or wireless connection between the things that are connected or an indirect connection through one or more passive or active intermediary devices. The meaning of "a," "an," and "the" include plural references. The meaning of "in" includes "in" and "on." Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

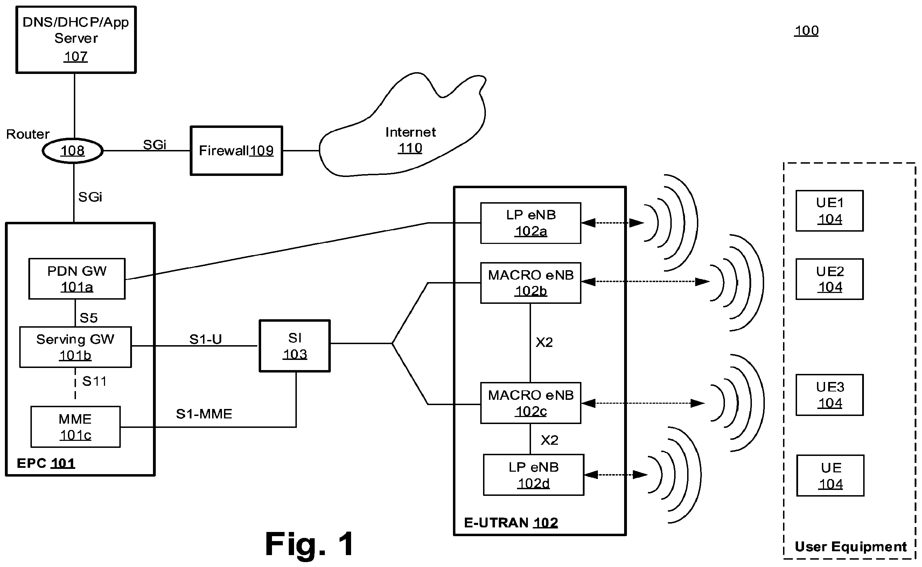

Fig. 1 illustrates a section of an end-to-end network architecture 100 of an LTE-U network with various components of the network to provide mechanisms for co-existence with itself, with other LTE operators, and with incumbent technologies, according to some embodiments of the disclosure.

In some embodiments, network 100 comprises core network 101, Radio Access Network (RAN) 102, Interface 103, Dynamic Host Configuration Protocol (DHCP) Application (App.) Server or Domain Name System (DNS) App. Server 107, Router 108, Firewall 109, and Internet 110.

An example of core network 101 is an Evolved Packet Core (EPC) also referred to as a System Architecture Evolution (SAE) core. An example of RAN 102 is an Evolved Universal

Mobile Telecommunications System (UMTS) Terrestrial Radio Access Network (E-UTRAN). An example of interface 103 is an SI interface. So as not to obscure the various embodiments, only a section of core network 101, as well as the RAN 102, is illustrated. Core network 101 includes Packet Data Network Gateway (PDN GW or PGW) 101a, Serving Gateway (serving GW, or SGW) 101b, and Mobility Management Entity (MME) 101c. The interface between PGW 101a and SGW 101b is S5. The interface between SGW 101b and MME 101c is S11.

PDN GW 101a (which is also referred to here as PGW) terminates a SGi interface toward the packet data network (PDN). PDN GW 101a routes data packets between EPC 101 and the external PDN (not shown), and may be a key node for policy enforcement and charging data collection. It may also provide an anchor point for mobility with non-LTE network accesses. The external PDN can be any kind of Internet Protocol (IP) network, as well as an IP Multimedia Subsystem (IMS) domain. PDN GW 101a and Serving GW 124 may be realized in one physical node. PDN GW 101a and Serving GW 124 may also be realized in separate physical nodes as well.

Serving GW 101b (which is also referred to here as SGW) terminates the interface toward RAN 102. In addition, SGW 101b routes data packets between RAN 102 and core network 101. SGW 101b may be a local anchor point for handovers between eNBs.

MME 101c is similar in function to the control plane of legacy Serving General Packet Radio Service (GPRS) Support Nodes (SGSN). MME 101c manages mobility aspects in access such as gateway selection and tracking area list management. SGW 101b and MME 101c may be realized in one physical node or also in separate physical nodes.

RAN 102 (which is also referred to here as E-UTRAN 102) includes Enhanced/Evolved Node B's (abbreviated as eNodeB or eNB) 102a/b/c/d (which may function as base stations) for communicating with one or more UEs 104. eNBs 102a/b/c/d can comprise of macro eNBs 101b/c and Low Power (LP) eNBs 102a/d. eNB is an element in E-UTRA of the LTE standard that is the evolution of the element Node B in UMTS Terrestrial Radio Access (UTRA) of UMTS. UMTS is a third generation mobile cellular system for networks based on the Global System for Mobile Communications (GSM) standard. It is the hardware that is connected to the mobile phone network that communicates directly with the UEs, like a base transceiver station (BTS) in GSM networks. Traditionally, a Node B has minimum functionality, and is controlled by a Radio Network Controller (RNC). However, with an eNB (e.g., eNB 102), there is no separate controller element. This simplifies the architecture and allows lower response times.

eNB interfaces with the SAE core 101 (also known as the EPC) and other eNBs. For example, eNB 102b uses the S1-AP protocol on the S1-MME interface with MME 101c for control plane traffic. eNB also uses the GPRS Tunneling Protocol (GTP-U), which is the defining IP-based protocol of the GPRS core network protocol on the S1-U interface with the SGW for user plane traffic. Collectively, the S1-MME and S1-U interfaces are known as the S1 interface 103, which represents the interface from eNB 102b/c to EPC 101.

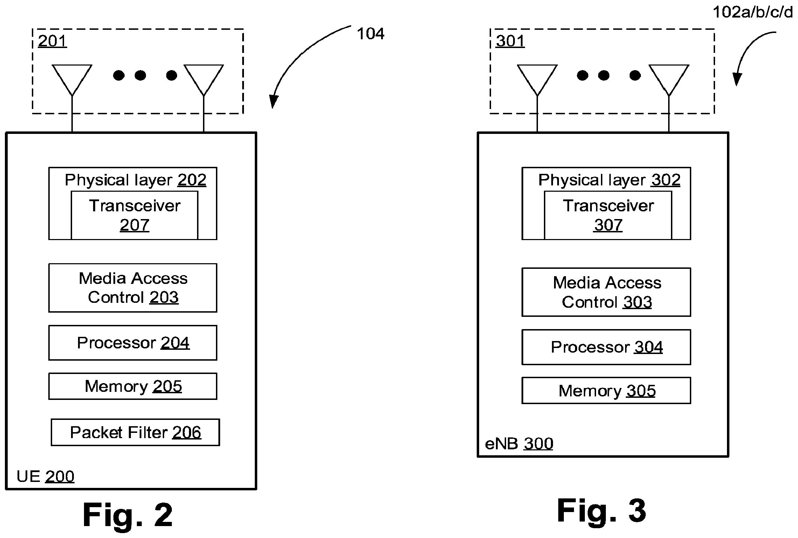

eNBs (e.g., macro 102b/c and LP 102a/d) conclude the air interface protocol. eNBs may be the first point of contact for a UE 104. In some embodiments, eNB may perform various logical roles for RAN 102 including RNC functions such as data packet scheduling, mobility management, radio bearer management, and uplink and downlink dynamic radio resource management. An embodiment of eNB 102a/b/c/d is described with reference to **Fig. 3**.

Referring back to **Fig. 1**, UEs 104 may be arranged to communicate Orthogonal Frequency-Division Multiplexing (OFDM) communication signals with an eNB 102a/b/c/d over a multicarrier communication channel according to an OFDM communication technique. The OFDM signals may include a myriad of orthogonal subcarriers. OFDM is a method of encoding digital data on multiple carrier frequencies.

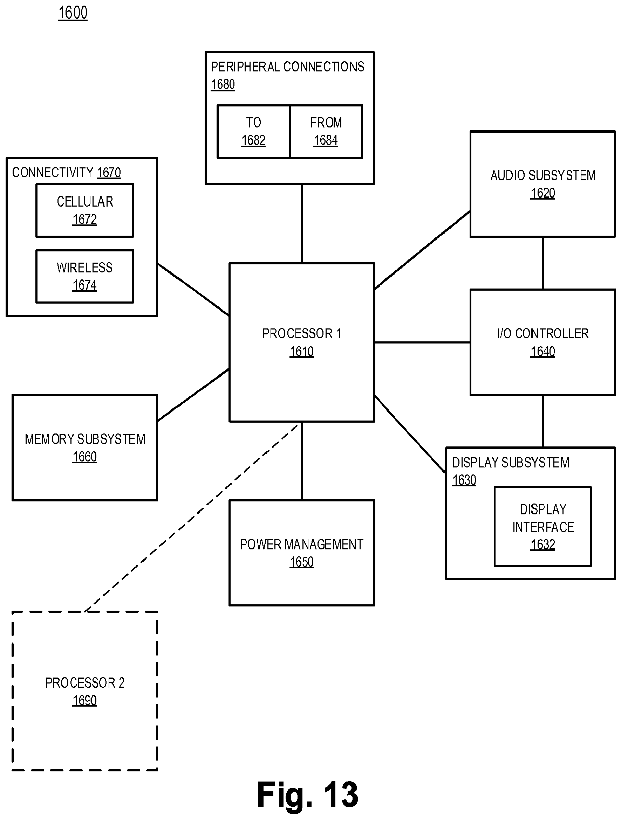

In some embodiments, UE 104 is any device used directly by an end-user to communicate. It can be a handheld telephone, a laptop computer equipped with a mobile broadband adapter, or any other device. UE 104 connects to the base station, for example, Node B/eNodeB 102a as specified in the ETSI 125/136-series and 3GPP 25/36-series of specifications. UE 104 roughly corresponds to the mobile station (MS) in GSM systems. Various bearers (i.e., carriers) are used to provide End-to-End Service from UE 104 to the Internet, for example. An embodiment of UE 104 is described with reference to **Fig. 2** and **Fig. 13**.

Referring back to **Fig. 1**, S1 interface 103 is the interface that separates RAN 102 and EPC 102. S1 interface 103 is split into two parts. In the first part, the S1-U carries traffic data between eNBs 102b/c and SGW 101b. The second part is the S1-MME, a signaling interface between the eNBs 102b/c and the MME 101c. The X2 interface is the interface between eNBs 102b/c. The X2 interface includes-two parts, the X2-C and X2-U. The X2-C is the control plane interface between eNBs 101b/c and the X2-U is the user plane interface between the eNBs 101b/c.

LP cells (or nodes) are usually used to extend coverage to indoor areas where outdoor signals do not reach well. LP cells are also used to add network capacity in areas with very heavy phone usage such as airports. The term LP eNB refers to any low power eNB for implementing a narrower cell (i.e., narrower than a macro cell) such as a femtocell, picocell, or microcell. Femtocell eNBs are normally provided by a mobile network operator to its residential or commercial customers. A femtocell is generally the size of a residential gateway. It typically connects to the user's broadband line. When the femtocell is plugged in the broadband line, it connects to the mobile operator's mobile network. The connected femtocell then provides extra coverage of, for example, 30 to 50 meters for residential femtocells. Therefore, an LP eNB (e.g., 102a/d) may be a femtocell eNB since it is coupled through the PGW 101a.

Likewise, a picocell is a wireless communication system usually covering a small area, such as corporate offices, shopping areas, or aircrafts, etc. A picocell eNB can couple through the X2 link to another eNB. For example, a picocell eNB can couple to macro eNB 102b through its Base Station Controller (BSC). Therefore, an LP eNB (e.g., 102a/d) may be realized with a picocell eNB. One reason for realizing LP eNB 101a with a picocell eNB is that the LP eNB is coupled to macro eNB 102c via an X2 interface. Picocell eNBs or other LP eNBs may incorporate some or all the features of a macro eNB. In some cases, picocell eNBs or other LP eNBs are referred to as an Access Point (AP) base station (BS) or an enterprise femtocell.

In some cases, a downlink resource grid is used for downlink transmissions from eNB 102a/b/c/d to UE 104. The downlink resource grid may be a time-frequency grid. The time-frequency grid is a physical resource in the downlink in each slot. Such a time-frequency plane representation is used for OFDM systems. The time-frequency resource grid is formed of columns and rows. Each column and each row of the time-frequency resource grid corresponds to one OFDM symbol and one OFDM subcarrier, respectively.

In the time domain, the duration of the time-frequency resource grid in the time domain corresponds to one slot in a radio frame. The smallest time-frequency unit in a time-frequency resource grid is designated as a resource element. Each time-frequency resource grid includes a number of resource blocks. The resource blocks describe the mapping of particular physical channels to resource elements. Each resource block includes a collection of resource elements. In the frequency domain, the collection of resource elements represent the smallest quanta of currently allowable resources. There are many different physical downlink channels which are conveyed via such resource blocks. For example, physical downlink channels can be the Physical Downlink Shared Channel (PDSCH) and the Physical Downlink Control Channel (PDCCH).

The PDSCH carries user data from an eNB to UE 104. PDSCH also carries higher-layer signaling to UE 104 (e.g., UE1). The PDCCH carries resource allocations related to the PDSCH and information about the transport format. PDCCH also informs UE 104 about the resource allocation, transport format, and Hybrid Automatic Repeat Request (H-ARQ) information related to the uplink shared channel. Generally, downlink scheduling (i.e., assigning control and shared channel resource blocks to UEs 104 within a cell) is performed at the eNB (e.g., one or more eNBs 102a/b/c/d). This downlink scheduling is based on channel quality information fed back from UEs 104 to eNB 102a/b/c/d. The downlink resource assignment information is then sent to a UE 104 (e.g., UE1) on the control channel (e.g., PDCCH) which is used for (or assigned to) UE 104.

To convey the control information, the PDCCH uses Control Channel Elements (CCEs). The PDCCH complex-valued symbols are first organized into quadruplets before being mapped to resource elements. The quadruplets are then permuted using a sub-block inter-leaver for rate matching. Each PDCCH is transmitted using one or more of these CCEs. Each CCE corresponds to nine sets of four physical resource elements. These sets of physical resource elements are known as Resource Element Groups (REGs). In one example, four Quadrature Phase Shift Keying (QPSK) symbols are mapped to each REG. Depending on the size of the Downlink Control Information (DCI) and the channel condition, the PDCCH can be transmitted using one or more CCEs.

In LTE downlink, the eNB (e.g., eNB 102a/b) periodically transmits one or more synchronization signals and signals carrying system information. Examples of the one or more synchronization signals are Primary Synchronization Signals (PSS) and Secondary Synchronization Signals (SSS). Examples of signals carrying system information are Physical Broadcast Channel (PBCH) signals. LTE downlink transmission contains Common Reference Signals (CRS) in every sub frame even if the sub frames are empty (i.e., when no data is being transmitted).

A UE (e.g., UE 104) first acquires a Physical Cell Identifier (PCI), frame synchronization information, and time slot to read system information blocks from the eNB. If UE 104 is currently tuned to a specific frequency channel, it reads the PSS to synchronize on a sub-frame level. The PSS is periodically transmitted by eNB 102a. So, UE 104 is synchronized regularly (or periodically) with eNB 102a. UE 104 then reads the SSS which is located in the same sub-frame as the PSS. UE 104 achieves a physical layer cell identity group number from the SSS. The SSS is periodically transmitted by eNB 102a. So, UE 104 is regularly (or periodically) synchronized with eNB 102a using the SSS. Once UE 104 knows the PCI for a given cell, it also knows the location of cell reference signals such as CRS. Reference signals are used in channel estimation, cell selection, cell reselection, and handover procedures.

If an LTE-U network is deployed in an unlicensed frequency band, such transmission by eNB 102a/b of the PSS and SSS, PBCH signals, and CRS may cause interference to other incumbent technologies on that spectrum. In some cases, the interference is severe enough to violate regulatory requirements. Some embodiments described here provide mechanisms for the LTE-U network to coexist with itself, with other incumbent technologies, and for self-co-existence among different LTE operators.

Fig. 2 illustrates a high-level block diagram of UE 200 (e.g., one of UEs 104) with mechanisms to operate in co-existence with itself in an LTE-U network, with other LTE operators, and with incumbent technologies, according to some embodiments. It is pointed out that those elements of Fig. 2 having the same reference numbers (or names) as the elements of any other figure can operate or function in any manner similar to that described, but are not limited to such.

In some embodiments, UE 200 may include physical (PHY) layer circuitry 202, Media Access Control (MAC) circuitry 203, Processor 204, Memory 205, and Packet Filter(s) 206. So as not to obscure the embodiments, a high level simplified architecture of UE 200 is described. A person skilled in the art would appreciate that other components (not shown) are used in addition to the ones shown to form a complete UE. In some embodiments, PHY layer circuitry 202 includes Transceiver 207 for transmitting and receiving signals to and from eNB 102a/b/c/d and other eNBs. Transceiver 207 also transmits and receives signals to and from other UEs or other devices using one or more antennas 201. In some embodiments, MAC circuitry 203 controls access to the wireless medium. Processor 204 and Memory 205 are arranged to perform the operations described with reference to some embodiments.

In some embodiments, antennas 201 may comprise one or more directional or omnidirectional antennas, including monopole antennas, dipole antennas, loop antennas, patch antennas, microstrip antennas, coplanar wave antennas, or other types of antennas suitable for transmission of Radio Frequency (RF) signals. In some multiple-input multiple-output (MIMO) embodiments, antennas 201 are separated to take advantage of spatial diversity. **Fig. 13** describes another embodiment of UE 104.

**Fig. 3** illustrates a block diagram of eNB 300 (e.g., one of eNB 102a/b/c/d) with mechanisms to operate in co-existence with itself in an LTE-U network, with other LTE operators, and with incumbent technologies, according to some embodiments of the disclosure. It should be noted that in some embodiments, eNB 300 may be a stationary non-mobile device. It is pointed out that those elements of **Fig. 3** having the same reference numbers (or names) as the elements of any other figure can operate or function in any manner similar to that described, but are not limited to such.

In some embodiments, eNB 300 may include PHY layer circuitry 302, MAC circuitry 303, Processor 304, and Memory 305. So as not to obscure the embodiments, a high level simplified architecture of eNB is described. A person skilled in the art would appreciate that other components (not shown) are used in addition to the ones shown to form a complete eNB. In some embodiments, PHY layer circuitry 302 includes Transceiver 307 for transmitting and receiving signals to and from UEs 104 and other eNBs using one or more antennas 301. In some embodiments, MAC circuitry 303 controls access to the wireless medium. In some embodiments, Processor 304 and Memory 305 are arranged to perform the operations described with reference to some embodiments.

In some embodiments, antennas 301 may comprise one or more directional or omnidirectional antennas, including monopole antennas, dipole antennas, loop antennas, patch antennas, microstrip antennas, coplanar wave antennas, or other types of antennas suitable for transmission of RF signals. In some MIMO embodiments, antennas 301 are separated to take advantage of spatial diversity.

Although UE 200 and eNB 300 are each described as having several separate functional elements, one or more of the functional elements may be combined and may be implemented by combinations of software-configured elements and/or other hardware elements. In some embodiments of this disclosure, the functional elements can refer to one or more processes operating on one or more processing elements. Examples of software and/or hardware configured elements include Digital Signal Processors (DSPs), one or more microprocessors, DSPs, Field-Programmable Gate Arrays (FPGAs), Application Specific Integrated Circuits (ASICs), Radio-Frequency Integrated Circuits (RFICs), etc.

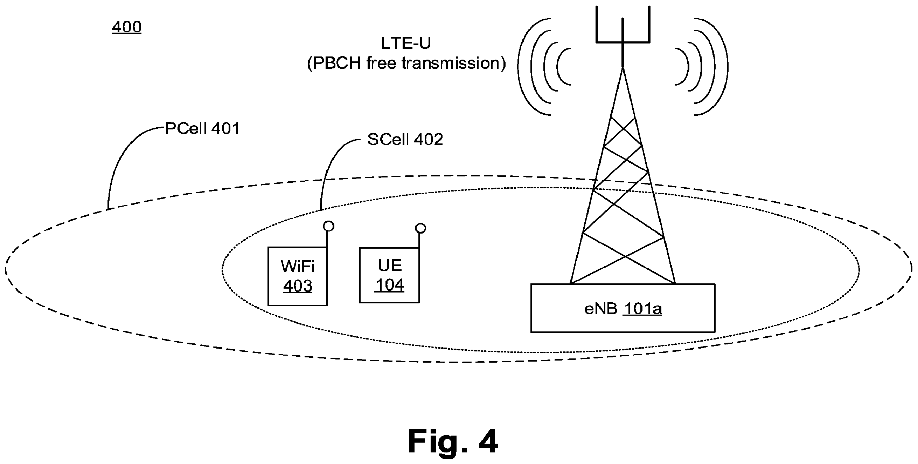

**Fig. 4** illustrates a simplified cell configuration 400 in which eNB (e.g., 102a/b) communicates with one or more UEs on an LTE network operating in an unlicensed spectrum (i.e., LTE-U network) such that the LTE-U network co-exists with itself, with different LTE operators, and reduces or eliminates interference with other incumbent technologies, according to some embodiments of the disclosure. It is pointed out that those elements of **Fig. 4** having the same reference numbers (or names) as the elements of any other figure can operate or function in any manner similar to that described, but are not limited to such.

In LTE-A networks, carrier aggregation (CA) is introduced. One technical effect of CA is that bandwidth of the LTE network increases because multiple carriers of similar or varying bandwidths are aggregated. Higher bandwidth allows for high speed video and audio streaming. Each component carrier of the multiple carriers in CA corresponds to a serving cell. There are two categories of cells-Primary Cell (PCell) and Secondary Cell (SCell). PCell is one of the serving cells and the rest of the cells are SCells.

In some embodiments, cell configuration 400 comprises PCell 401, SCell 402, UE 104, Wi-Fi device 403, and eNB 102a/b which is operable to reduce interference to Wi-Fi device 402 (an example of an incumbent technology) from UE 104 when eNB 102a/b operates in LTE-U frequency band. PCell 401 manages the CA configuration in LTE-A networks.

Some general characteristics of PCell 401 are that random access procedure is performed over the PCell; system channel signals such as the PDCCH signal, PDSCH signal, Physical Uplink Control Channel (PUCCH) signal, and Physical Uplink Shared Channel (PUSCH) signal can be transmitted over the PCell; the PCell cannot be deactivated; and mobility procedures and measurements are determined on the PCell. The SCell is configured after connection establishment to provide additional radio resources. Some general characteristics of the SCell are that Random Access Channel (RACH) procedure is not allowed in the SCell and system channel signal PUCCH cannot be transmitted over the SCell.

A UE may be connected to one or more carriers in a CA scenario. A UE can have one PCell and one or more SCells. The unlicensed band is most likely to be used as a secondary carrier or SCell. Each component carrier (CC) transmits the PSS/SSS, CRS and PBCH signals.

For example, interference in LTE-U networks can be reduced by inhibiting transmission of the PBCH signals over the unlicensed SCell 402 by the eNB (e.g., eNB 102a/b). Note, there can be one or more SCells such that some of the SCells operate in the licensed spectrum and some operate in the unlicensed spectrum. In such examples, UE 104 continues to receive the PBCH signals from PCell eNB 102a/b in the licensed frequency band. System information may be carried in the unlicensed SCell PBCH can be transmitted using another licensed Cell. For example, system information can be carried using RRC signaling transmitted over the licensed PCell 401.

The fewer the number of signals transmitted by eNB 102a/b in the unlicensed frequency band (i.e. transmission of one less system information signal), the lesser the chance of interference with different LTE operators and with other incumbent technologies such as Wi-Fi device 403 operating on traditional Wi-Fi band. The UE 104 could for example acquire the system information related to SCell 402 from transmission to PCell 401. UE 104 could then use this system information related to SCell 402 acquired via RRC signaling from PCell 401 transmission to facilitate the determination of characteristics such as, a number of CRS antenna ports, Physical Hybrid-ARQ Indicator Channel (PHICH) duration, etc.

In some embodiments, eNB 102a/b (or 300) comprises hardware processing circuitry including antenna 301 and transmitter 307 coupled to antenna 301. In some embodiments, transmitter 307 is operable to inhibit transmission of system information to UE 104 when the spectrum is unlicensed. In some embodiments, transmitter 307 is operable to transmit, in a licensed spectrum, system information to UE 104. In some embodiments, a carrier transmitted on the licensed spectrum can serve as PCell 401 to UE 104. In some embodiments, the carrier transmitted on the unlicensed spectrum can serve as SCell 402. In some embodiments, the system information is transmitted using the PBCH. As noted above, in some examples, the carrier on the licensed spectrum can transmit the information associated with the PBCH of another carrier, which is operated on the unlicensed spectrum, to UE 104. In some embodiments, UE 104 is at least one of a LTE cellular device, an advanced LTE cellular device, or a fifth generation (5G) LTE cellular device.

By not transmitting the PBCH signals on the unlicensed carrier, fair co-existence is ensured with other incumbent radio access technologies (RAT), as well as other LTE operators that may use the unlicensed spectrum/medium. By refraining from transmitting the PBCH signals when there are no data transmissions, interference to other RATs is reduced, according to some embodiments. Due to the unlicensed nature of the medium, the transmission by itself may not be reliable. While reliability may not be a big issue for the PSS/SSS and CRS, transmission of system information using the PBCH needs reliability. In some embodiments, by transmitting the PBCH information for an unlicensed carrier by using RRC message from a licensed PCell, the reception reliability of such message can be improved.

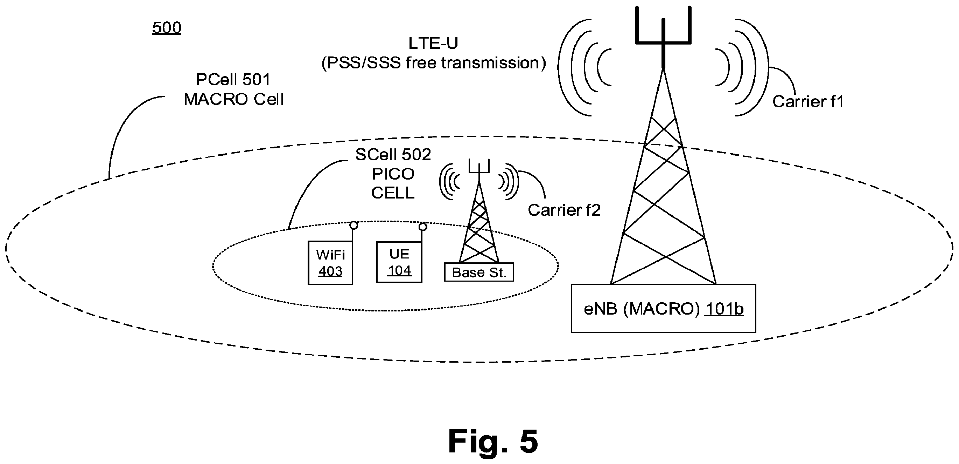

**Fig. 5** illustrates a simplified cell configuration 500 in which eNB (e.g., 102a/b) communicates with one or more UEs on an LTE network operating in an unlicensed spectrum (i.e., LTE-U network) such that the LTE-U network co-exists with itself, with different LTE operators, and reduces or eliminates interference with other incumbent technologies, according to some embodiments of the inveniton. It is pointed out that those elements of **Fig. 5** having the same reference numbers (or names) as the elements of any other figure can operate or function in any manner similar to that described, but are not limited to such.

In LTE downlink, eNB (e.g., eNB 102a) periodically transmits one or more synchronization signals (e.g., the PSS and SSS) and signals carrying system information (e.g., the PBCH signals). LTE downlink transmission also contains CRS in every sub-frame even if the sub-frames are empty (i.e., when no data is being transmitted). If an LTE-U network is deployed in the unlicensed band, such transmission of the PSS and SSS, PBCH, and CRS will cause interference to other incumbent technologies on that spectrum. As discussed here, such interference may violate regulatory requirements.

In some embodiments, eNB 102b refrains from transmitting the PSS and SSS signals periodically to UE 104 in the unlicensed band. One technical effect of refraining from transmitting the PSS and SSS is reduced interference for incumbent technologies (e.g., Wi-Fi device 403) and other LTE operators.

In CA scenario 1, both the PCell and SCell are co-located such that the PCell operates in frequency f1 and the SCell operates in frequency f2. In one embodiment of CA scenario 1, PCell 501 uses a licensed spectrum while SCell 502 uses the unlicensed spectrum. In some embodiments, for CA scenario 1, both carrier frequencies f1 and f2 can be co-located and can be adjacent frequencies. In such embodiments, synchronization mechanism (i.e., using the PSS and SSS) used for PCell 501 can be used for synchronization of SCell 502 carrier f2. Here, the licensed spectrum serves as PCell 501 (like PCell 401) while the unlicensed spectrum serves as SCell 502 (like SCell 402). By using the synchronization mechanism used for PCell 501 for synchronization of SCell 502 carrier f2, in some embodiments, eNB 102b can be allowed to refrain from sending the PSS and SSS periodically, according to some embodiments.

In the PSS/SSS, cell identification (ID) information is transmitted to the UE, although indirectly. It is possible to transmit the cell ID information from another carrier. However, another use of the PSS/SSS is to assist the UE in frequency/time synchronization. To this end, the UE cannot infer the synchronization of one carrier from another carrier's PSS/SSS. In some embodiments, when the two carriers f1 and f2 are co-located (i.e., transmitted from the same transmitter as well as being adjacent in frequency band), and if the UE is frequency/time synchronized with one carrier (e.g., carrier f1), that also means that the UE is frequency/time synchronized with the other carrier (e.g., carrier f2).

According to the invention, by not transmitting synchronization signals such as the PSS and SSS on the unlicensed carrier, fair co-existence is ensured with other incumbent RATs, as well as other LTE operators that may use the unlicensed spectrum/medium. In some embodiments, by refraining from transmitting the PSS and SSS, when there are no data transmissions, interference to other RATs is reduced.

In CA scenario 4, PCell 501 is a macro cell and operates on a carrier frequency f1, and SCell 402 is a picocell which operates on frequency f2. In the example of CA scenario 4 relevant to LAA, frequency f1 can be in the licensed spectrum, while frequency f2 can be in the unlicensed spectrum. In this case, unlike the invention and outlined in CA scenario 1, PCell 501 and SCell 502 carrier frequencies f1 and f2 are not co-located, and independent synchronization is performed for UE 104 in SCell 402.

In addition to synchronization, UE 104 in the unlicensed band needs to discover the proximity of a Pico carrier and needs to perform Reference Signal Received Power (RSRP) and/or Reference Signal Received Quality (RSRQ) measurements in such carriers. In some embodiments, a new PSS/SSS and discovery signal design in CA scenario 4 for the LTE-U network is used as described in a co-pending and co-owned United States Patent Application Serial No. 14/473,008 filed August 29, 2014, which is incorporated by reference in its entirety.

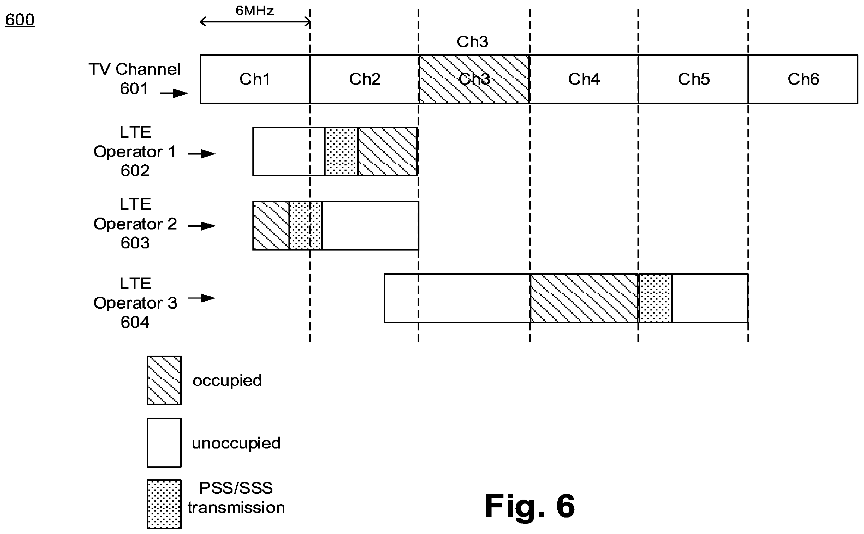

**Fig. 6** illustrates frequency spectrum 600 with several frequency bands such that the PSS and SSS are relocated for co-existence of an LTE-U network with itself, with incumbent DTV transmission, and for self-coexistence with other LTE-U operators. It is pointed out that those elements of **Fig. 6** having the same reference numbers (or names) as the elements of any other figure can operate or function in any manner similar to that described, but are not limited to such.

Here, x-axis is frequency. While the example is illustrated for incumbent DTV transmissions, the concepts are applicable to other incumbent technologies in the unlicensed spectrum. For example, the mechanism for relocating the PSS/SSS for ensuring co-existence in the LTE-U network is also applicable to WLAN compliant transmissions, according to some embodiments of the disclosure.

Currently for LTE-A, an eNB transmits the PSS/SSS in the center six Physical Resource Blocks (6PRBs) because the UE does not know in advance the system bandwidth. In some embodiments, UE 104 can acquire or receive bandwidth information of a SCell from the RRC message transmitted over the licensed PCell (e.g., PCell 401) spectrum as discussed with reference to **Figs. 4-5****.**

Referring back to **Fig. 6**, the requirement of transmitting the PSS/SSS in the center 6PRB due to unknown bandwidth size is not necessary for the SCell (e.g., SCell 401), where similar information is transmitted using the PCell. However, the PSS/SSS transmission may be necessary for other purposes, such as frequency/time synchronization, cell discovery etc. In some examples, the unlicensed SCell may transmit the PSS/SSS in resource block positions other than the center 6PRBs of the bandwidth. Such shifting of the PSS/SSS to different resource blocks can ensure co-existence among multiple LTE-U network operators as well as other incumbent RATs using the spectrum.

The eNB 102a/b may have logic to determine whether the centers of the 6PRBs are occupied. In some embodiments, when the center 6PRBs are occupied (i.e., other radio access technologies (e.g. Wi-Fi or DTV) or other LTE operator are currently using these PRBs), then the transmitter of eNB 102a/b will attempt to transmit the synchronization signals (i.e., the PSS/SSS) using unoccupied frequencies. The transmitter of eNB 102a/b may be operable to transmit the synchronization signals using the unoccupied frequencies in response to determining that the centers of the 6PRBs are occupied. The eNB 102a/b may transmit the synchronization signals in frequencies away from the center 6PRBs of the transmission bandwidth.

In **Fig. 6**, six DTV channels (Ch) 601 are shown such that Ch1, Ch2, Ch3, Ch4, Ch5, and Ch6 have different frequency bands of 6MHz width. Here, Ch3 is in the occupied frequency band as indicated by the patterned section, while Ch1, Ch2, Ch4, Ch5, and Ch6 are in the unoccupied frequency bands as indicated in the blank sections. One way to reduce interference with existing or incumbent technologies and other LTE operators is to relocate the PSS/SSS away from the center of 6PRBs. For example, LTE Operators 1-3 (i.e., 602-603) via their respective eNBs can transmit their respective PSS/SSS transmissions away from the center of their respective 6PRBs such that the PSS/SSS are transmitted in the unoccupied frequency bands of DTV Channels 601.

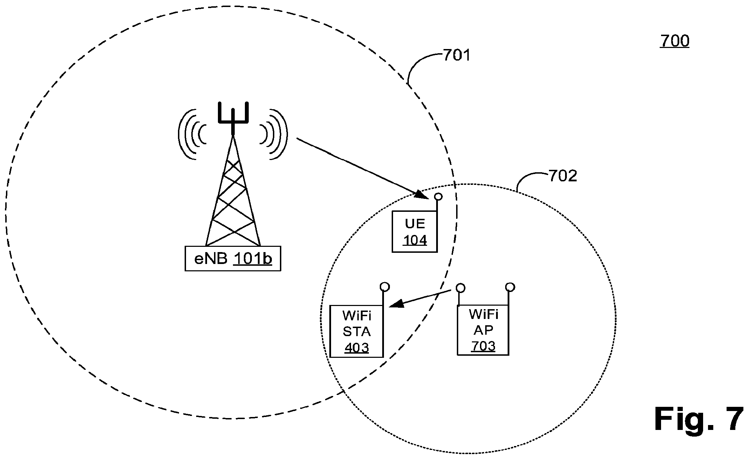

**Fig. 7** illustrates configuration 700 to resolve possible interference associated with a Hidden Wi-Fi Terminal or Device which is sensed by UE 104 and/or eNB 102a/b of the LTE-U network to ensure co-existence with the Wi-Fi Terminal. It is pointed out that those elements of **Fig. 7** having the same reference numbers (or names) as the elements of any other figure can operate or function in any manner similar to that described, but are not limited to such.

If only LTE-U compatible eNBs sensed the medium (i.e., the unlicensed medium) to determine whether the channel is empty, hidden terminal problem may arise. Hidden terminal problem generally refers to missing sensing of existing wireless LAN transmission. For example, with reference to configuration 700, using only LTE-U eNB based sensing to determine whether the medium is empty before transmitting in the downlink on the unlicensed spectrum to UE 104 may cause interference to Wi-Fi Station (STA) 403 which is being serviced by Wi-Fi Access Point (AP) 703, where AP 703 and STA 403 communicate via WLAN transmission protocol. Here, AP 703 is the hidden terminal which cannot be identified by eNB sensing.

The hidden terminal problem can be resolved by using an LTE-U UE with sensing capability. By using both eNB 102a/b and UE 104 based channel sensing in an LTE-U network, the hidden terminal problem is resolved. When UE 104 detects ongoing transmission (e.g., Wi-Fi transmission by AP 703) over an unlicensed medium (e.g., WLAN), UE 104 notifies eNB 102a/b regarding this transmission.

UE 104 can transmit such notification signal(s) to eNB 102a/b using the licensed uplink transmission. UE 104 feeds the notification signal(s) to eNB 102a/b to an LTE scheduler using the uplink licensed spectrumOnce the unlicensed SCell knows the presence of such incumbent transmission through feedback by UE 104, the SCell can refrain from transmission on that spectrum and look for an alternative spectrum to transmit.

In some examples, UE 104 is equipped with sensors to detect other ongoing transmission on the carrier frequency of the unlicensed medium. UE 104 may be equipped with an apparatus that uses auto-correlation methods for detecting ongoing transmission in the unlicensed frequency band. The other ongoing transmission may be from other RATs as well as other LTE operators. The sensors may be a variety of sensors. For example, energy detection based sensors, and waveform detection based sensors, etc. may be used for such sensors.

In some examples, existing Wi-Fi receivers in UE 104 can be used for sensing other ongoing transmission on the unlicensed medium. Local Area Network (LAN) sensing capability of UE 104 can be used to sense or detect other ongoing transmission on the unlicensed medium. This detected information can then be transmitted by UE 104 to eNB 102a/b so that the SCell can refrain from transmission on the unlicensed frequency band.

While various examples are described with reference to having sensors in UE 104 to detect ongoing transmission, same or similar sensors can be implemented in eNB 102a/b to detect ongoing transmission. In such embodiments, eNB 102a/b can corroborate information from UE 104 so that the SCell can refrain from transmission on the unlicensed frequency band.

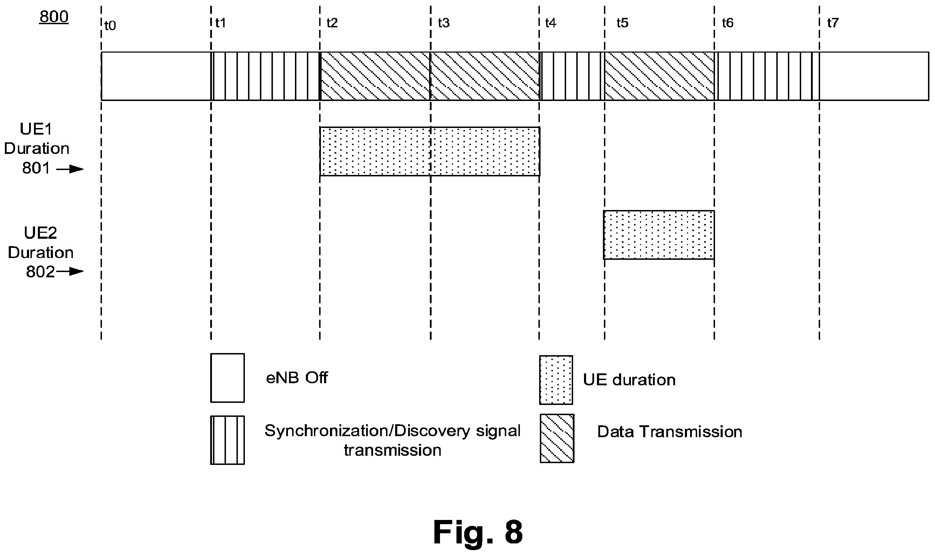

**Fig. 8** illustrates timeline 800 exemplifying a mechanism for turning on/off eNB 102a/b for co-existence of the LTE-U network with incumbent transmissions, and for self-coexistence with other LTE-U operators, according to some embodiments of the disclosure. It is pointed out that those elements of **Fig. 8** having the same reference numbers (or names) as the elements of any other figure can operate or function in any manner similar to that described, but are not limited to such.

Timeline 800 shows eight time regions marked from t0 to t7. In these time regions, in some embodiments, eNB 102a/b can be turned on/off for co-existence of the LTE-U network with incumbent transmissions, and for self-coexistence with other LTE-U operators. When existing always-on LTE eNB is used in the unlicensed frequency band, the existing always-on LTE eNB will create interference to other incumbent technologies as well as other LTE operators using the frequency band. This interference is due to continuous transmission of the CRS, PSS/SSS, and PBCH signals even if there are no actual data transmissions. In addition to that, due to the always-on nature of such eNB transmissions, whenever other technologies such as WLAN or IEEE 802.22 compatible devices sense the spectrum, they may consider that spectrum as busy and may refrain from transmitting in that spectrum altogether.

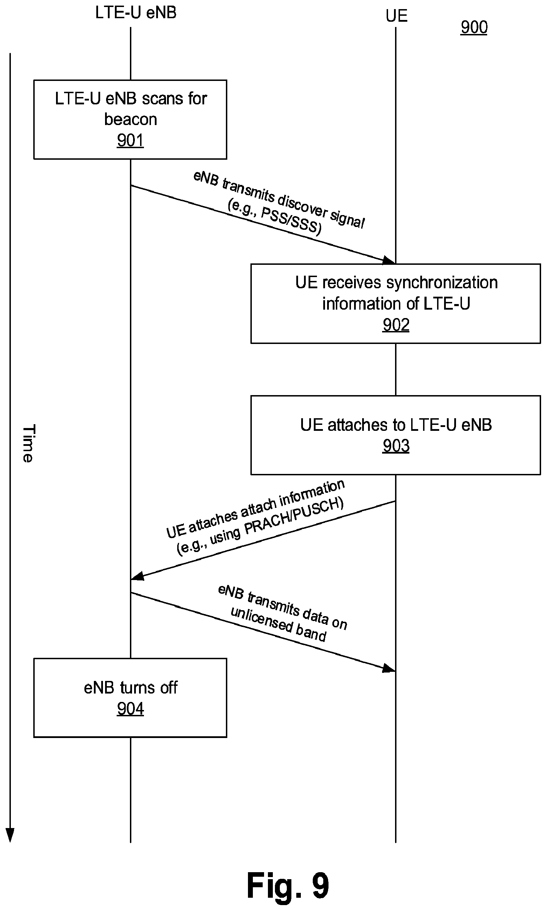

eNB 102a/b can turn off the unlicensed SCell when not in use. In some embodiments, whenever no UE is connected to the unlicensed SCell, eNB 102a/b turns itself off (e.g., the transmitter of eNB 102a/b is off). When the SCell is off (i.e., eNB 102a/b is in off state), eNB 102a/b refrains from transmission of the CRS, PSS/SSS, signals on the PBCH, and other discovery signals. In some embodiments, the SCell can turn itself on when it is connected to a UE and data transmission is required. In some embodiments, SCell can turn itself off as discussed with reference to **Fig. 9**.

Referring back to **Fig. 8**, in some embodiments, eNB 102a/b can periodically turn SCell on/off with a predetermined or programmable period. eNB 102a/b can turn on/off the SCell upon triggering of an event. For example, when UE1 requests to transmit data, eNB 102a/b turns on the SCell.

The concept of Discontinuous Transmission (DTX) can be used in eNB 102a/b for LTE-U network. DTX is a power saving mechanism in which eNB 102a/b can be momentarily powered down when there is no UE to service.

Timeline 800 illustrates a three stage process used by eNB 102a/b, according to some implementation example. Initially, LTE-U eNB 102a/b is off between t0 and t1. For example, the transmitter of LTE-U eNB 102a/b is off. Here, turning on/off an eNB generally refers to turning on/off the transmitter of the eNB.

During off stage, no signals are transmitted from eNB 102a/b. When eNB 102a/b is turned on (e.g., either periodically or by a triggering of an event), eNB 102a/b initially transmits discovery signal(s) as illustrated by the region between t1 and t2. The discovery signal is also referred to here as a preamble signal. The discovery signal precedes transmission of any data. The discovery signal(s) is one or more of the PSS/SSS, CRS, Channel State Information-Reference Signals (CSI-RS), PBCH signal, or other discovery signals. LTE-U UE (e.g., UE1 and/or UE2) uses such discovery signal(s) to receive frequency/time synchronization, frame information, RSRP/RSRQ measurement, Automatic Gain Control (AGC) settings for an amplifier, channel estimation, and identification information of the LTE-U network, etc.

Once synchronized, LTE-U eNB 102a/b transmits data to UE 104 (e.g., UE1). In this example, LTE-U eNB 102a/b transmits data from t2 to t4 to UE1 (i.e., the patterned UE1 duration 801). In After completing the data transmission, LTE-U eNB 102a/b may choose to stay on and keep transmitting discovery signal(s) for a while in case some other UE joins the frequency band as shown between t4 and t5.

In this example, UE2 joins the frequency and so LTE-U eNB 102a/b remains on to serve UE2 as shown between t5 and t6 (i.e., the patterned UE2 duration 802). In some embodiments, if no UE is active after certain (predetermined or programmable) duration, LTE-U eNB 102a/b turns itself off as illustrated by region t7 and beyond.

While the examples of **Fig. 8** are described with reference to LTE-U eNB 102a/b turning on/off to reduce interference with other devices operating in the unlicensed band, the embodiments are not limited to such. The mechanisms of turning on/off can be initiated by UE signaling 104. For example, in some embodiments, UE can send a signal to eNB, and based on that signal eNB can turn on a particular CC.

**Fig. 9** illustrates flowchart 900 exemplifying the mechanism of **Fig. 8**. It is pointed out that those elements of **Fig. 9** having the same reference numbers (or names) as the elements of any other figure can operate or function in any manner similar to that described, but are not limited to such.

Although the blocks and/or operations in the flowchart with reference to **Fig. 9** are shown in a particular order, the order of the actions can be modified. Thus, the illustrated bloacks and/or operations can be performed in a different order, and some actions/blocks may be performed in parallel. Some of the blocks and/or operations listed in **Fig. 9** are optional. The numbering of the blocks presented is for the sake of clarity and is not intended to prescribe an order of operations in which the various blocks must occur. Additionally, operations from the various flows may be utilized in a variety of combinations.

Initially, LTE-U eNB transmitter is off and is not transmitting data to any UE. At block 901, a receiver of LTE-U eNB 102a/b scans for a beacon. The transmitter of LTE-U eNB 102a/b may turn on periodically or by a trigger of an event. An event can be a higher layer event defined by the network. Upon turning on, the transmitter of LTE-U eNB 102a/b transmits one or more discovery signals to discover any UE within the coverage zone LTE-U eNB 102a/b. The discovery signals can be one or more of the PSS/SSS, CRS, CSI-RS, PBCH signal, or other discovery signals.

At block 902, UE 104 receives the synchronization information carried by the discovery signals. LTE-U UE 104 uses such discovery signals to receive frequency/time synchronization, frame information, RSRP/RSRQ measurement, AGC settings for an amplifier, channel estimation, and identification information of the LTE-U network, etc. After being synchronized, at block 903, UE 104 attaches to LTE-U eNB 102a/b. Upon being attached, UE 104 sends the attach information to LTE-U eNB 102a/b. For example, UE 104 sends the Physical Random Access Channel (PRACH) signal and/or PUSCH signals to LTE-U eNB. LTE-U eNB 102a/b upon receiving the attach information begins to transmit data to UE 104 on the unlicensed band.

After completing the data transmission, the transmitter of LTE-U eNB 102a/b may choose to stay on and keep transmitting discovery signal(s) for a while in case some other UE joins the frequency. If no UE is active after certain (predetermined or programmable) duration of time, at block 904, the transmitter of LTE-U eNB 102a/b turns itself off. By turning itself off, potential interference causing signals such as the PSS/SSS, CRS, CSI-RS, PBCH signal, or other discovery signals, cease to transmit. This allows for co-existence of the LTE-U network with incumbent transmissions, and for self-coexistence with other LTE-U operators.

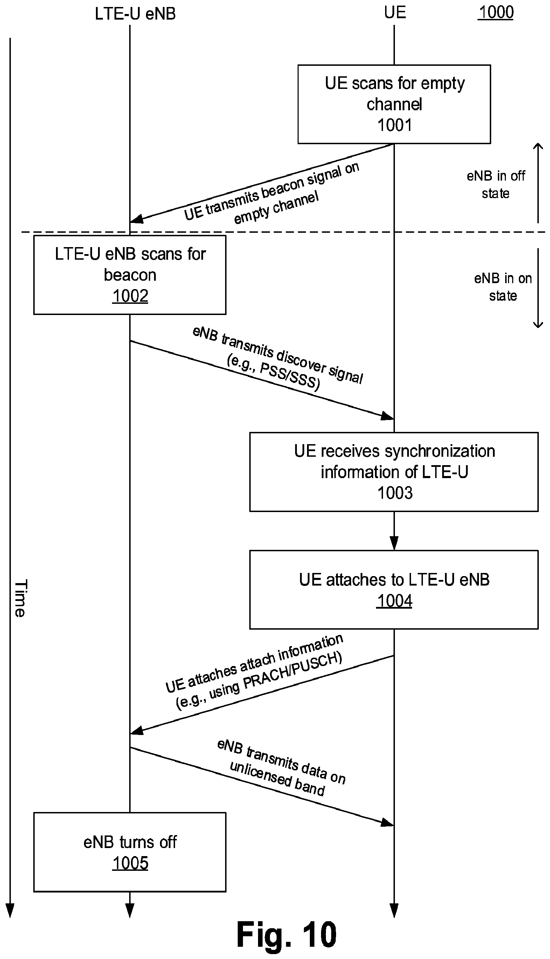

**Fig. 10** illustrates flowchart 1000 exemplifying a mechanism initiated by UE 104 for co-existence of LTE-U with incumbent transmissions, and for self-coexistence with other LTE-U operators. It is pointed out that those elements of **Fig. 10** having the same reference numbers (or names) as the elements of any other figure can operate or function in any manner similar to that described, but are not limited to such.

Although the blocks and/or operations in the flowchart with reference to **Fig. 10** are shown in a particular order, the order of the actions can be modified. Thus, the illustrated blocks and/or operations can be performed in a different order, and some actions/blocks may be performed in parallel. Some of the blocks and/or operations listed in **Fig. 10** are optional. The numbering of the blocks presented is for the sake of clarity and is not intended to prescribe an order of operations in which the various blocks must occur. Additionally, operations from the various flows may be utilized in a variety of combinations.

As discussed here, LTE-U eNB can be equipped with sensing capabilities to sense incumbent technologies (e.g., WLAN, DTV, etc.). At block 1001, while transmitting/receiving on the licensed band, UE 104 can simultaneously scan the unlicensed spectrum for empty band(s). During that time (i.e., when UE 104 is scanning for an empty channel on the unlicensed spectrum), the transmitter of LTE-U eNB 102a/b is off. Upon finding an empty band UE 104 transmits a beacon signal on the empty channel (or band) to inquire for existence of LTE-U capable SCell.

At block 1002, the receiver of SCell eNB 102a/b scans for the beacon signal or probe in all possible unlicensed spectrum while its transmitter is in an off state. Alternatively, UE 104 sends feedback regarding the empty channel information to the PCell during the licensed UL spectrum. When the SCell eNB 102a/b receives the knowledge of such UE either through scanning the beacon signal or through the backhaul from the PCell, the transmitter of SCell LTE-U eNB 102a/b turns itself on. When the transmitter of SCell LTE-U eNB 102a/b turns itself on, eNB 102a/b transmits one or more discovery signals in its coverage zone. The discovery signals can be one or more of the PSS/SSS, CRS, CSI-RS, PBCH signal, or other discovery signals.

At block 1003, UE 104 receives the synchronization information carried by the discovery signals. LTE-U UE 104 uses such discovery signals to get frequency/time synchronization, frame information, RSRP/RSRQ measurement, AGC settings for an amplifier, channel estimation, and identification information of the LTE-U network, etc. After being synchronized, at block 1004, UE 104 attaches to LTE-U eNB 102a/b. Upon being attached, UE 104 sends the attach information to LTE-U eNB 102a/b. For example, UE 104 sends the PRACH/PUSCH signals to LTE-U eNB 102a/b. LTE-U eNB 102a/b upon receiving the attach information begins to transmit data to UE 104 on the unlicensed band

After completing the data transmission, the transmitter of LTE-U eNB 102a/b may choose to stay on and keep transmitting discovery signal(s) for a while in case some other UE joins the frequency. If no UE is active after certain (predetermined or programmable) duration of time, at block 1005, the transmitter of LTE-U eNB 102a/b turns itself off. By turning itself off, potential interference causing signals such as the PSS/SSS, CRS, CSI-RS, PBCH signal, or other discovery signals, cease to transmit. This allows for co-existence of the LTE-U network with incumbent transmissions, and for self-coexistence with other LTE-U operators.

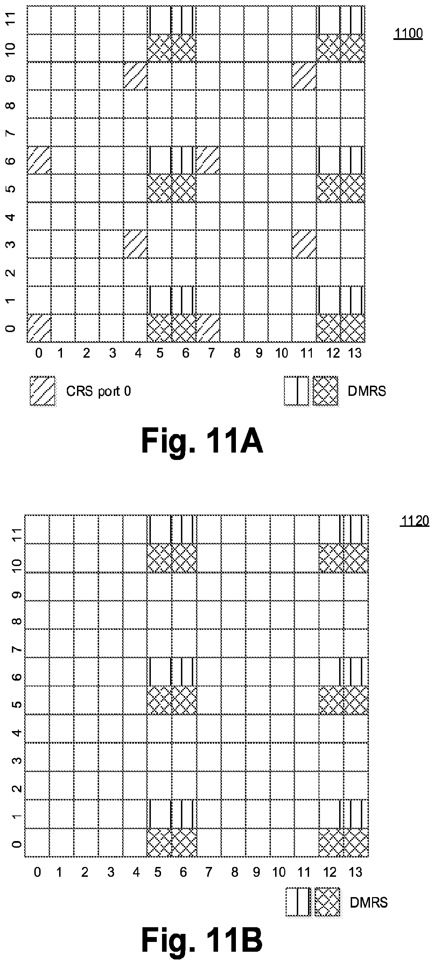

For co-existence of the LTE-U network with incumbent transmissions and for self-coexistence with other LTE-U operators, CRS free sub-frames can be defined for LTE-U. **Fig. 11A** illustrates sub-frame 1100 with CRS, while **Fig. 11B** illustrates sub-frame 1120 with CRS free transmissionAbsence of CRS may significantly reduce interference generated by LTE-U eNB to the incumbent system. CRS free transmission may also improve energy efficiency of the LTE-U eNB. In existing LTE systems, CRS is used for multiple purposes, such as: fine frequency and time tracking, RSRP/RSRQ measurement, and demodulation purpose. By inhibiting transmission of the CRS or by defining CRS free sub-frames, alternate mechanisms may need to be developed for fine frequency and time tracking, RSRP/RSRQ measurement, and demodulation purposes.

Other reference signals such as the CSI-RS, PSS/SSS, PRS, or a combination of such can be used for time and frequency tracking. New discovery signal(s) could be introduced in place of the PSS/SSS. Time and frequency granularity resolved using a reference signal depends on the frequency/time density of the reference signal. In some embodiments, the new discovery signal(s) have higher density in time and frequency domains compared to the PSS/SSS to achieve finer frequency and time tracking.

RSRP/RSRQ measurement functionalities can be achieved by use of the CSI-RS. If Transmission Mode (TM) 9 and/or TM10 are used for data transmission, then Demodulation Reference Signals (DM-RS) can be used for data demodulation instead of CRS. In A new CSI-RS and a new transmission mode can also be defined as described in US 9,356,979 B2 and US 9,681,428 B2.

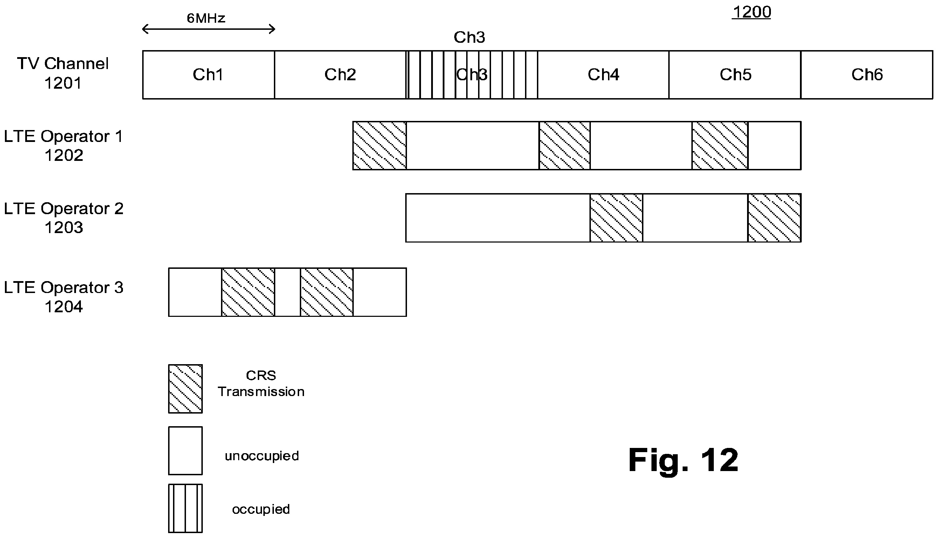

Fig. 12 illustrates spectrum 1200 with several frequency bands such that CRS transmission is reduced for co-existence of an LTE-U network with incumbent DTV transmission, and for self-coexistence with other LTE-U operators. It is pointed out that those elements of Fig. 12 having the same reference numbers (or names) as the elements of any other figure can operate or function in any manner similar to that described, but are not limited to such.

For example, instead of completely removing CRS from LTE-U system, as described with reference to Fig. 11B, CRS transmissions can be reduced by LTE-U eNB 102a/b to decrease interference generated by LTE-U eNB in the unlicensed spectrum. Such reduction in CRS can be achieved either in frequency domain, time domain, or using a reduced number of CRS ports. In some embodiments, to achieve self-coexistence between different LTE-U operators, different operators can use different parts of the spectrum to transmit reduced CRS.

Spectrum 1200 illustrates six DTV channels 1201, each channel being 6MHz wide in this example. In this example, Ch3 is the occupied channel, while channels Ch1, Ch2, Ch4, Ch5, and Ch6 are unoccupied. Here, three LTE-U operators are shown using the unlicensed spectrum with reduced CRS transmission. LTE-U operator 1 1202 sends CRS transmissions in band regions of channels Ch2, Ch4, and Ch5. LTE-U operator 2 1203 sends CRS transmissions in band regions of channels Ch4 and Ch5 such that the CRS transmissions are sent over frequencies different than the CRS transmissions in those channels by LTE-U operator 2 1203. LTE-U operator 3 1204 sends CRS transmissions in band regions of Ch1 and Ch2 such that the CRS transmissions are sent over frequencies different than the CRS transmissions in those channels by LTE-U operators 1 and 2. By reducing the CRS transmission, co-existence of LTE-U with incumbent DTV transmission and self-coexistence with other LTE-U operators is achieved.

Fig. 13 illustrates UE 1600 with mechanisms to operate in co-existence with itself, other incumbent technologies, and/or other LTE operators in an LTE-U network, according to some embodiments of the invention. It is pointed out that those elements of Fig. 13 having the same reference numbers (or names) as the elements of any other figure can operate or function in any manner similar to that described, but are not limited to such.

UE 1600 may be a smart device or a computer system or a SoC with mechanisms to operate in co-existence with itself, other incumbent technologies, and/or other LTE operators in an LTE-U network, according to some embodiments of the invention. Fig. 13 illustrates a block diagram of an embodiment of a mobile device in which flat surface interface connectors could be used. In one embodiment, computing device 1600 represents a mobile computing device, such as a computing tablet, a mobile phone or smart-phone, a wireless-enabled e-reader, or other wireless mobile device. It will be understood that certain components are shown generally, and not all components of such a device are shown in computing device 1600.

In one embodiment, computing device 1600 includes a first processor 1610 with mechanisms to operate with co-existence with itself, other incumbent technologies, and/or other LTE operators in an LTE-U network, according to some embodiments discussed. Other blocks of the computing device 1600 may also include the mechanisms to operate in co-existence with itself, other incumbent technologies, and/or other LTE operators in an LTE-U network of some embodiments. The various embodiments of the present disclosure may also comprise a network interface within 1670 such as a wireless interface so that a system embodiment may be incorporated into a wireless device, for example, cell phone or personal digital assistant.

In one embodiment, processor 1610 (and/or processor 1690) can include one or more physical devices, such as microprocessors, application processors, microcontrollers, programmable logic devices, or other processing means. The processing operations performed by processor 1610 include the execution of an operating platform or operating system on which applications and/or device functions are executed. The processing operations include operations related to I/O (input/output) with a human user or with other devices, operations related to power management, and/or operations related to connecting the computing device 1600 to another device. The processing operations may also include operations related to audio I/O and/or display I/O.

In one embodiment, computing device 1600 includes audio subsystem 1620, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into computing device 1600, or connected to the computing device 1600. In one embodiment, a user interacts with the computing device 1600 by providing audio commands that are received and processed by processor 1610.

Display subsystem 1630 represents hardware (e.g., display devices) and software (e.g., drivers) components that provide a visual and/or tactile display for a user to interact with the computing device 1600. Display subsystem 1630 includes display interface 1632, which includes the particular screen or hardware device used to provide a display to a user. In one embodiment, display interface 1632 includes logic separate from processor 1610 to perform at least some processing related to the display. In one embodiment, display subsystem 1630 includes a touch screen (or touch pad) device that provides both output and input to a user.

I/O controller 1640 represents hardware devices and software components related to interaction with a user. I/O controller 1640 is operable to manage hardware that is part of audio subsystem 1620 and/or display subsystem 1630. Additionally, I/O controller 1640 illustrates a connection point for additional devices that connect to computing device 1600 through which a user might interact with the system. For example, devices that can be attached to the computing device 1600 might include microphone devices, speaker or stereo systems, video systems or other display devices, keyboard or keypad devices, or other I/O devices for use with specific applications such as card readers or other devices.

As mentioned above, I/O controller 1640 can interact with audio subsystem 1620 and/or display subsystem 1630. For example, input through a microphone or other audio device can provide input or commands for one or more applications or functions of the computing device 1600. Additionally, audio output can be provided instead of, or in addition to display output. In another example, if display subsystem 1630 includes a touch screen, the display device also acts as an input device, which can be at least partially managed by I/O controller 1640. There can also be additional buttons or switches on the computing device 1600 to provide I/O functions managed by I/O controller 1640.

In one embodiment, I/O controller 1640 manages devices such as accelerometers, cameras, light sensors or other environmental sensors, or other hardware that can be included in the computing device 1600. The input can be part of direct user interaction, as well as providing environmental input to the system to influence its operations (such as filtering for noise, adjusting displays for brightness detection, applying a flash for a camera, or other features).

In one embodiment, computing device 1600 includes power management 1650 that manages battery power usage, charging of the battery, and features related to power saving operation. Memory subsystem 1660 includes memory devices for storing information in computing device 1600. Memory can include nonvolatile (state does not change if power to the memory device is interrupted) and/or volatile (state is indeterminate if power to the memory device is interrupted) memory devices. Memory subsystem 1660 can store application data, user data, music, photos, documents, or other data, as well as system data (whether long-term or temporary) related to the execution of the applications and functions of the computing device 1600.

Elements of embodiments are also provided as a machine-readable medium (e.g., memory 1660) for storing the computer-executable instructions (e.g., instructions to implement any other processes discussed herein). The machine-readable medium (e.g., memory 1660) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

Connectivity 1670 includes hardware devices (e.g., wireless and/or wired connectors and communication hardware) and software components (e.g., drivers, protocol stacks) to enable the computing device 1600 to communicate with external devices. The computing device 1600 could be separate devices, such as other computing devices, wireless access points or base stations, as well as peripherals such as headsets, printers, or other devices.

Connectivity 1670 can include multiple different types of connectivity. To generalize, the computing device 1600 is illustrated with cellular connectivity 1672 and wireless connectivity 1674. Cellular connectivity 1672 refers generally to cellular network connectivity provided by wireless carriers, such as provided via GSM or variations or derivatives, CDMA (code division multiple access) or variations or derivatives, TDM (time division multiplexing) or variations or derivatives, or other cellular service standards. Wireless connectivity (or wireless interface) 1674 refers to wireless connectivity that is not cellular, and can include personal area networks (such as Bluetooth, Near Field, etc.), local area networks (such as Wi-Fi), and/or wide area networks (such as WiMax), or other wireless communication.

Peripheral connections 1680 include hardware interfaces and connectors, as well as software components (e.g., drivers, protocol stacks) to make peripheral connections. It will be understood that the computing device 1600 could both be a peripheral device ("to" 1682) to other computing devices, as well as have peripheral devices ("from" 1684) connected to it. The computing device 1600 commonly has a "docking" connector to connect to other computing devices for purposes such as managing (e.g., downloading and/or uploading, changing, synchronizing) content on computing device 1600. Additionally, a docking connector can allow computing device 1600 to connect to certain peripherals that allow the computing device 1600 to control content output, for example, to audiovisual or other systems.

In addition to a proprietary docking connector or other proprietary connection hardware, the computing device 1600 can make peripheral connections 1680 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

## Claims

1. An Evolved Node-B, eNB(102a-d, 300) for communication with one or more User Equipment, UEs (104) using an unlicensed spectrum and a licensed spectrum, the eNB (102a-d, 300) comprising:
transmitter (307) is configured to transmit on a carrier operating in the licensed spectrum, to a UE (104), one or both of Primary Synchronization Signal, PSS, and Secondary Synchronization Signal, SSS, meant to be transmitted on a carrier operating in the unlicensed spectrum;
wherein the carrier operating on the unlicensed spectrum provides a secondary cell (502) associated with the UE (104) and the carrier operating on the licensed spectrum provides a primary cell (401, 501, 701) associated with the UE (104));
wherein the carrier frequencies f1 and f2 of the carrier operating on the unlicensed spectrum and the carrier operating on the licensed spectrum, respectively, are used to transmit signals from the same transmitter (307) as well as being adjacent in frequency band.

2. A User Equipment, UE (104), for communicating with an Evolved Node- B, eNB (102a-d, 300), the UE (104) comprising:
a receiver (207) operable to receive from the eNB (102a-d, 300) and on a carrier operating on a licensed spectrum one or both of Primary Synchronization Signal, PSS, and Secondary Synchronization Signal, SSS, meant to be transmitted on a carrier operating on an unlicensed spectrum;
wherein a carrier operating on the unlicensed spectrum provides a secondary cell (502) associated with UE (104) and the carrier operating on the licensed spectrum provides a primary cell (401, 501, 701) associated with the UE (104);
wherein the carrier frequencies f1 and f2 of the carrier operating on the unlicensed spectrum and the carrier operating on the licensed spectrum, respectively, are used to transmit signals from the same transmitter (307) of the eNB (102a-d, 300) as well as being adjacent in frequency band; and
wherein the UE (104) is configured to synchronize with the carrier operating on the unlicensed spectrum based on one or both of the PSS and the SSS received on the carrier operating on the licensed spectrum.

## Patentansprüche

1. Evolved Node-B, eNB(102a-d, 300) zur Kommunikation mit einem oder mehreren Benutzergeräten, UEs (104), die ein unlizenziertes Spektrum und ein lizenziertes Spektrum verwenden, der eNB (102a-d, 300) umfassend:
Überträger (307), der konfiguriert ist, um auf einem Träger, der im lizenzierten Spektrum arbeitet, an ein UE (104) zu übertragen, wobei eines oder beide von primärem Synchronisationssignal, PSS, und sekundärem Synchronisationssignal, SSS, dazu bestimmt sind, auf einem Träger übertragen zu werden, der im unlizenzierten Spektrum arbeitet;
wobei der auf dem unlizenzierten Spektrum arbeitende Träger eine sekundäre Zelle (502) bereitstellt, die mit dem UE (104) assoziiert ist, und der auf dem lizenzierten Spektrum arbeitende Träger eine primäre Zelle (401, 501, 701) bereitstellt, die mit dem UE (104) assoziiert ist;
wobei die Trägerfrequenzen f1 und f2 des auf dem unlizenzierten Spektrum arbeitenden Trägers bzw. des auf dem lizenzierten Spektrum arbeitenden Trägers verwendet werden, um Signale vom gleichen Überträger (307) zu übertragen, sowie im Frequenzband benachbart sind.

2. Benutzergerät, UE (104), zum Kommunizieren mit einem Evolved Node-B, eNB (102a-d, 300), das UE (104) umfassend:
einen Empfänger (207), der betreibbar ist, um vom eNB (102a-d, 300) und auf einem Träger, der auf einem lizenzierten Spektrum arbeitet, eines oder beide von primärem Synchronisationssignal, PSS, und sekundärem Synchronisationssignal, SSS, zu empfangen, die dazu bestimmt sind, auf einem Träger übertragen zu werden, der auf einem unlizenzierten Spektrum arbeitet;
wobei ein auf dem unlizenzierten Spektrum arbeitender Träger eine sekundäre Zelle (502) bereitstellt, die mit dem UE (104) assoziiert ist, und der auf dem lizenzierten Spektrum arbeitende Träger eine primäre Zelle (401, 501, 701) bereitstellt, die mit dem UE (104) assoziiert ist;
wobei die Trägerfrequenzen f1 und f2 des auf dem unlizenzierten Spektrum arbeitenden Trägers bzw. des auf dem lizenzierten Spektrum arbeitenden Trägers verwendet werden, um Signale vom gleichen Überträger (307) des eNB (102a-d, 300) zu übertragen, sowie im Frequenzband benachbart sind; und
wobei das UE (104) konfiguriert ist, um mit dem auf dem unlizenzierten Spektrum arbeitenden Träger basierend auf einem oder beiden des PSS und des auf dem lizenzierten Spektrum arbeitenden Träger empfangenen SSS zu synchronisieren.

## Revendications

1. Un nœud-B évolué, eNB (102a-d, 300) destiné à une communication avec un ou plusieurs équipements d'utilisateur, UE (104) en utilisant un spectre non licencié et un spectre licencié, l'eNB (102a-d, 300) comprenant :
un émetteur (307) configuré pour transmettre à un UE (104), sur une porteuse opérant dans le spectre licencié, l'un ou les deux d'un signal de synchronisation primaire, PSS, et d'un signal de synchronisation secondaire, SSS, entendus comme devant être transmis sur une porteuse opérant dans le spectre non licencié ;
dans lequel la porteuse opérant sur le spectre non licencié donne une cellule secondaire (502) associée à l'UE (104) et la porteuse opérant sur le spectre licencié donne une cellule primaire (401, 501, 701) associée à l'UE (104) ;
dans lequel les fréquences de porteuse *f1* et *f2* de la porteuse opérant sur le spectre non licencié et de la porteuse opérant sur le spectre licencié, respectivement, sont utilisées pour transmettre des signaux en provenance du même émetteur (307) aussi bien que si elles étaient adjacentes dans la bande de fréquences.

2. Un équipement d'utilisateur, UE (104), destiné à communiquer avec un nœud-B évolué, eNB (102a-d, 300), l'UE (104) comprenant :
un récepteur (207) fonctionnel pour recevoir de l'eNB (102a-d, 300) et sur une porteuse opérant sur un spectre licencié l'un ou les deux d'un signal de synchronisation primaire, PSS, et d'un signal de synchronisation secondaire, SSS, entendus comme devant être transmis sur une porteuse opérant dans un spectre non licencié ;
dans lequel une porteuse opérant sur le spectre non licencié donne une cellule secondaire (502) associée à l'UE (104) et la porteuse opérant sur le spectre licencié donne une cellule primaire (401, 501, 701) associée à l'UE (104) ;
dans lequel les fréquences de porteuse *f1* et *f2* de la porteuse opérant sur le spectre non licencié et de la porteuse opérant sur le spectre licencié, respectivement, sont utilisées pour transmettre des signaux en provenance du même émetteur (307) de l'eNB (102a-d, 300) aussi bien que si elles étaient adjacentes dans la bande de fréquences ; et
dans lequel l'UE (104) est configuré pour se synchroniser avec la porteuse opérant sur le spectre non licencié sur la base de l'un ou des deux du PSS et du SSS reçus sur la porteuse opérant sur le spectre licencié.
